# EUROPEAN PATENT APPLICATION

(11) **EP 4 046 722 A1**
(43) Date of publication of application: **24.08.2022**
(21) Application number: 20877919.9
(22) Date of filing: 25.09.2020
(51) Int. Cl.: B05C 11/10, B29B 7/40, B29B 7/54, B29C 48/35, B29C 48/37

(54) **ROTARY EXTRUDING MACHINE**

(30) Priority: 16.10.2019 JP 2019189192
(71) Applicant: Zuiko Corporation, Settsu-Shi, Osaka 566-0045 (JP)
(72) Inventor: OOUE Masaya, Settsu-Shi, Osaka 566-0045 (JP); KAWANO Takayoshi, Settsu-Shi, Osaka 566-0045 (JP)
(74) Representative: SSM Sandmair
(86) International application number: PCT/JP2020/036205
(87) International publication number: WO 2021/075223

(57) **Abstract**

The present rotary extruder includes: a rotor having a cylindrical surface centered on a rotor axis extending in a horizontal direction; and a casing having an inner peripheral surface that defines a bore, wherein: the casing defines an input port into which a resin material including a thermoplastic resin is fed, and a discharge port from which a plasticized molten resin is discharged; the cylindrical surface of the rotor and the inner peripheral surface of the casing are arranged eccentric with each other, thereby forming a gap whose cross section is crescent-shaped, extending in a rotation direction of the rotor from the input port to the discharge port between the inner peripheral surface and the cylindrical surface; and the input port is arranged at a top portion of the casing and the discharge port is arranged at a lower portion of the casing.

## Description

### TECHNICAL FIELD

The present invention relates to a rotary extruder for melting and discharging a thermoplastic resin.

### BACKGROUND ART

Conventional methods, in which a thermoplastic resin is melted to be used as a hot melt adhesive or for manufacturing films, strands, etc., have been known in the art.

Examples of an apparatus for melting and discharging a thermoplastic resin include rotary extruders described in the first patent document and the second patent document identified below, for example.

### CITATION LIST

### PATENT DOCUMENT

[FIRST PATENT DOCUMENT] USP 4,887,907 B
[SECOND PATENT DOCUMENT] USP 4,813,863 B

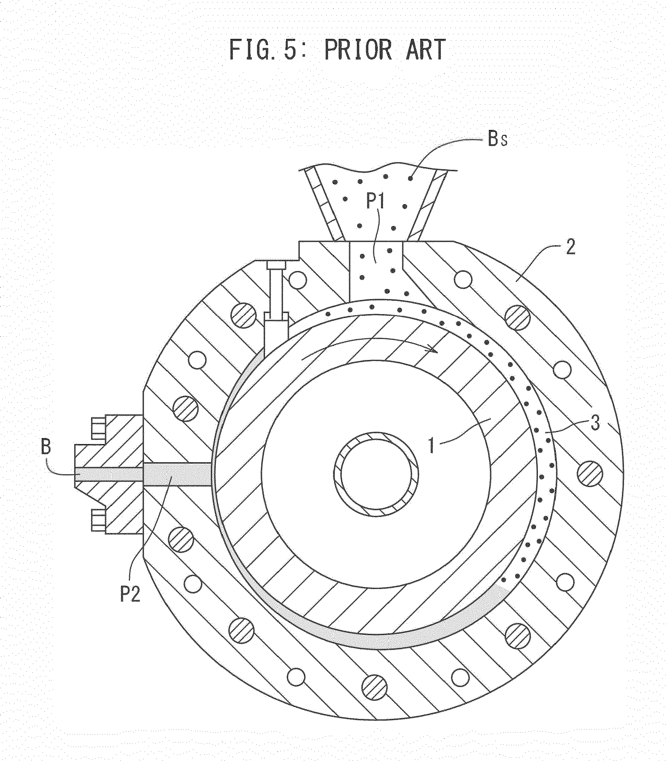

FIG. **5** shows an example of a system for feeding and melting a resin material **Bs** including a thermoplastic resin in a rotary extruder disclosed in the second patent document.

In this rotary extruder, the inner circumferential surface of a casing **2** and a cylindrical rotor **1** are arranged eccentric with each other, and the resin material **Bs** is plasticized in an arc-shaped gap (the kneading section **3)** therebetween so as to discharge a molten resin **B** from a discharge port **P2** arranged beside the gap (the kneading section **3**)**.**

### SUMMARY OF INVENTION

With such a structure, the molten resin **B** needs to be pushed up from a position that is orthogonally downward of the rotor **1** to a position that is orthogonally sideward of the rotor **1.** Now, if the viscosity of the plasticized resin material **Bs** is high, it is possible to stably feed the molten resin to the next process.

However, if the viscosity of the plasticized thermoplastic resin (molten resin) is low, there is slippage between the rotor **1** and the molten resin, it may not be possible to sufficiently discharge the molten resin from the discharge port **P2,** which is at an orthogonally sideward position, against the gravity. Therefore, the amount of discharge is likely to fluctuate.

Thus, it is an object of the present invention to provide a rotary extruder capable of discharging stably irrespective of the viscosity of the molten resin.

A rotary extruder of the present invention includes:
a rotor **1** having a cylindrical surface **10** centered on a rotor axis **1S** extending in a horizontal direction; and
a casing **2** having an inner peripheral surface **20** that defines a cylindrical hole **2B** extending in the horizontal direction, wherein:
   the casing **2** defines an input port **P1** into which a resin material **Bs** including a thermoplastic resin is fed, and a discharge port **P2** from which a molten resin **B,** obtained by kneading and plasticizing the resin material **Bs**, is discharged;
   the cylindrical surface **10** of the rotor **1** and the inner peripheral surface **20** of the casing **2** are arranged eccentric with each other, thereby forming a kneading section **3,** which is a gap whose cross section is crescent-shaped, extending in a rotation direction **R** of the rotor **1** from the input port **P1** to the discharge port **P2** between the inner peripheral surface **20** of the casing **2** and the cylindrical surface **10** of the rotor **1**; and
   the input port **P1** is arranged at a top portion **23** of the casing **2** and the discharge port **P2** is arranged at a lower portion **24** on an opposite side from the top portion **23** of the casing **2.**

According to the present invention, the resin material **Bs**, which is input into the casing **2** through the input port **P1**, is pushed into a crescent-shaped gap (the kneading section **3**), is plasticized as it moves downstream in the rotation direction **R** of the rotor **1**, and is discharged continuously from the discharge port **P2.** Now, since the discharge port **P2** is not arranged at a side portion of the rotor **1** but is arranged at the lower portion **24** on the opposite side from the top portion **23**, the molten resin will be discharged uniformly from the discharge port **P2** at the lower portion **24** even if the viscosity thereof is low.

### BRIEF DESCRIPTION OF THE DRAWINGS

FIG. **1** is a longitudinal cross-sectional view showing an example of a molten resin maker including one embodiment of a rotary extruder according to the present invention.
FIG. **2** is a transverse cross-sectional view thereof.
FIGS. **3(a), 3(b)** and **3(c)** are layout views showing the molten resin maker installed in a manufacture line for manufacturing a laminate.
FIG. **4** is a transverse cross-sectional view showing one embodiment of the rotary extruder of the present invention.
FIG. **5** is a transverse cross-sectional view showing an example of a conventional rotary extruder.

### DESCRIPTION OF EMBODIMENTS

The present invention will be understood more clearly from the following description of preferred embodiments taken in conjunction with the accompanying drawings. Note however that the embodiments and the drawings are merely illustrative and should not be taken to define the scope of the present invention. The scope of the present invention shall be defined only by the appended claims. In the accompanying drawings, like reference numerals denote like components throughout the plurality of figures.

One embodiment of the rotary extruder of the present invention will now be described with reference to the drawings.

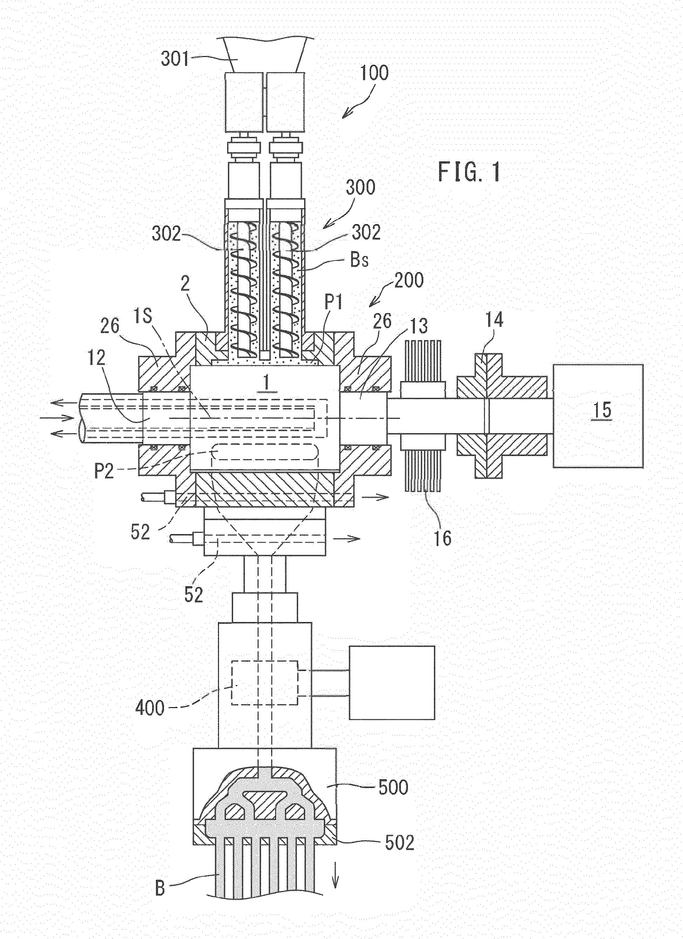

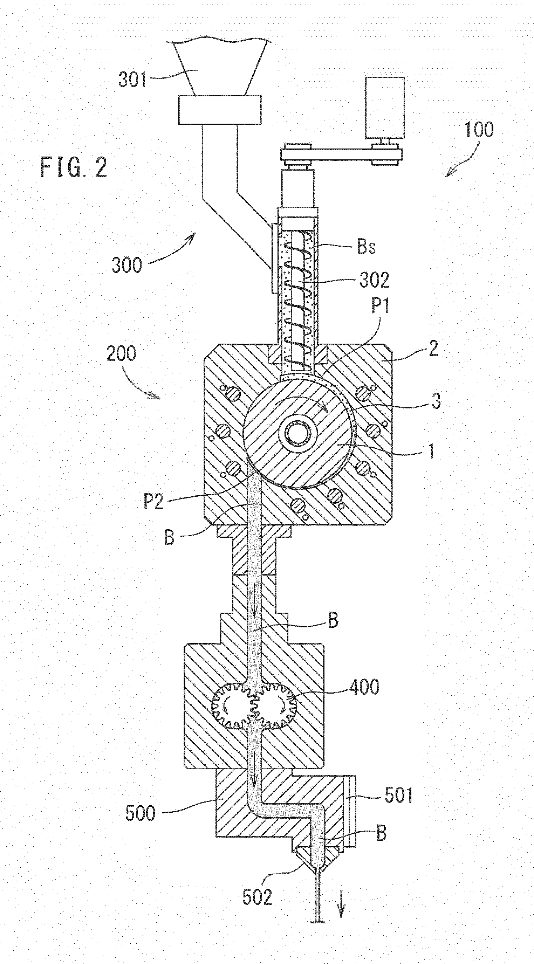

FIG. **1** and FIG. **2** schematically show a molten resin maker **100** including a present rotary extruder **200.** As shown in FIG. **1****,** etc., the molten resin maker **100** is composed of the rotary extruder **200,** a material feeder **300,** a gear pump **400,** a manifold **500,** etc.

As shown in these figures, the material feeder **300** is arranged upstream (upward) of the present rotary extruder **200,** whereas the gear pump **400** and the manifold **500** are arranged downstream (downward) of the present rotary extruder **200.** Before describing the present rotary extruder **200** in detail, these peripheral devices will be described.

The material feeder **300** shown in FIG. **2** includes a hopper **301** and a screw feeder **302** well known in the art. The screw feeder **302** feeds a resin material **Bs** including a thermoplastic resin fed from the hopper **301** to the rotary extruder **200.**

Note that together with the resin material **Bs,** a tackifier and a heat stabilizer, as additives, are also fed to the rotary extruder **200.**

The feed rate of the resin material **Bs** may be freely adjusted before being supplied to the screw feeder **302.** Specifically, the feed rate may be adjusted by pressure or via a flow control valve.

On the other hand, by increasing the amount of the heat stabilizer, deterioration of the resin material **Bs** can be prevented over a long time even if the heating or the heat retention time is prolonged.

Materials such as polyester, polypropylene, polyamide, butene 1, ethylene vinyl acetate copolymer, butyl methacrylate, styrene butadiene block rubber and styrene isoprene block rubber can be used as the resin material **Bs**. Thermoplastic elastomers may also be used, in which case, for example, polyethylene copolymers may be employed (see JPH10-29259A). These may be used alone or in combination.

Conventional known tackifiers such as rosin and rosin derivatives, phenol resins, terpene resins, coumarone-indene resins, petroleum resins, etc., may be used as tackifiers.

Conventional known antioxidants such as phenol-based, amine-based, sulfur-based, phosphorus-based, benzimidazole-based, etc., can be used as heat stabilizers.

In the present embodiment, two screw feeders **302** are provided, spaced apart from each other in the direction of the rotor axis **1S** of FIG. 1. By providing two or more screw feeders **302**, the resin material **Bs** can be fed to the input port **P1** evenly in the direction of the rotor axis **1S** of FIG. 1.

The rotary extruder **200** of FIG. **2** heats and plasticizes the resin material **Bs** that is fed from the material feeder **300.** The plasticized molten resin **B** is passed from the rotary extruder **200** to the manifold **500** through the gear pump **400.** Then, as shown in FIG. **1**, the molten resin **B** passes through a die **502** to be discharged in the form of a plurality of narrow and thin tapes, for example.

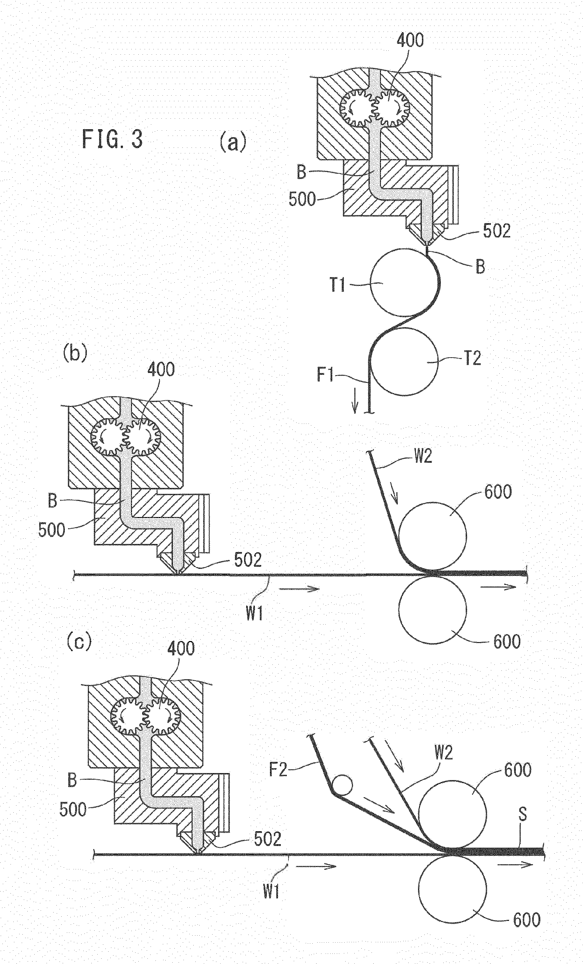

Then, as shown in FIG. **3(a)****,** for example, the molten resin B hanging from the die **502** is cooled on the outer peripheral surface of the first and second cooling rolls **T1, T2** to form elastic strands **F1.** In addition to elastic strands **F1,** the product may be a resin film or a hot melt adhesive to be described below.

In FIG. **1** to FIG. **5****,** for the sake of illustration, the resin material **Bs** is shown in a dot pattern and the molten resin **B** is shown in gray. However, the distinction between the resin material **Bs** and the molten resin **B** is not necessarily clear, but it is not necessary to clearly distinguish therebetween. Although the boundary between the resin material **Bs** and the molten resin **B** is shown in some figures, the boundary is merely shown for the sake of illustration and it does not indicate at what point (position) the resin material **Bs** turns into the molten resin **B**.

Next, the rotary extruder **200** will be described in detail.

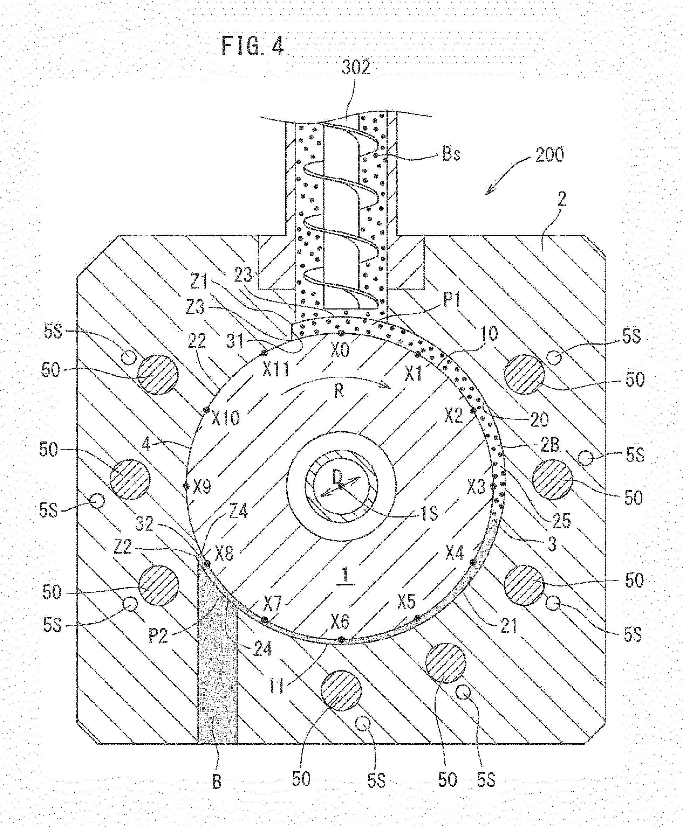

FIG. 4 shows, in a cross-sectional view, the rotary extruder **200.** In the figures showing the present embodiment, the rotor **1** is shown to be turning in the clockwise direction for the sake of discussion.

In FIG. **4****,** the rotary extruder **200** includes the rotor **1,** the casing **2,** etc.

The rotor **1** shown in FIG. **1** has a cylindrical surface **10** in FIG. **4** centered on the rotor axis **1S** extending in the horizontal direction. On the other hand, the casing **2** has an inner peripheral surface **20** defining a cylindrical bore (hole) **2B** of FIG. **4** extending in the horizontal direction of FIG. **1**. The casing **2** defines an input port **P1** into which the resin material **Bs** is fed and a discharge port **P2** from which the heated and plasticized molten resin **B** is discharged.

As shown in FIG. **1****,** the rotor **1** has integrally formed rotary shafts **12**, **13** that protrude from both ends of the rotor **1**. These rotary shafts **12**, **13** are rotatably supported by end plates **26, 26** which form the casing **2.**

A cooling channel may be formed in one (left) rotary shaft **12**, through which a refrigerant is introduced to cool the rotor **1**. A motor **15** is linked to the other (right) rotary shaft **13** via a joint **14**. Note that the other rotary shaft **13** and the joint **14** may be cooled through heat dissipation via fins **16**.

As shown in FIG. **1**, the input port **P1** and the discharge port **P2** are formed to be long and parallel to the rotor axis **1S**. The tips of a pair of screw feeders **302** are facing the input port **P1** elongated in the horizontal direction. The plurality of screw feeders **302** serve to make uniform the feed rate of the resin material **Bs**.

As shown in FIG. **4****,** the input port **P1** is located at the top portion **23** of the casing **2.** On the other hand, the discharge port **P2** is located at the lower portion **24** on the opposite side from the top portion **23** of the casing **2.** In the present embodiment, the discharge port **P2** extends in the orthogonally downward direction.

The gap (the kneading section **3)** extends in the rotation direction **R** of the rotor **1** from the input port **P1** to the discharge port **P2**, and is formed so that the cross section thereof is generally crescent-shaped.

Specifically, the cylindrical surface **10** of the rotor **1** and the inner peripheral surface **20** of the casing **2** are eccentrically arranged with respect to each other. Thus, a gap (the kneading section **3)** is formed, extending from the input port **P1** to the discharge port **P2**, between the inner peripheral surface **20** of the casing **2** and the cylindrical surface **10** of the rotor **1.**

The kneading section **3** of FIG. **4** extends halfway around the rotor **1** from the input port **P1** to a lowest portion **11** of the rotor **1.** The kneading section **3** further extends from the lowest portion **11** of the rotor **1** to the discharge port **P2**, which is above the lowest portion **11** and below a position that is orthogonally sideward of the rotor **1.**

A non-kneading section **4** is formed between the casing **2** and the rotor **1** of FIG. **4****,** extending from a position that is downstream of the discharge port **P2** in the rotation direction **R** of the rotor **1** to a position that is upstream of the input port **P1** in the rotation direction **R.**

In the non-kneading section **4,** the cylindrical surface **10** of the rotor **1** closely opposes the inner peripheral surface **20** of the casing **2.** On the other hand, in the kneading section **3,** the inner peripheral surface **20** of the casing **2** distantly opposes the cylindrical surface **10** of the rotor **1.**

In the present specification, "to closely oppose" encompasses a state where the width in the radial direction **D** of the rotor **1** of the non-kneading section **4** is narrower than the width in the radial direction **D** of the rotor **1** of the kneading section **3** continuous with the discharge port **P2,** or a state where the cylindrical surface **10** of the rotor **1** and the inner peripheral surface **20** of the casing **2** are substantially in contact with each other in the non-kneading section **4.**

FIG. **4** shows the start point **Z1** of the kneading section **3** on the inner peripheral surface **20** side of the casing **2,** the end point **Z2** of the kneading section **3** on the inner peripheral surface **20** side, the start point **Z3** of the kneading section **3** on the rotor **1** side, and the end point **Z4** of the kneading section **3** on the rotor **1** side. The casing **2** includes a first weir **31,** which is a wall (cliff face) indicated by a line that connects together the start point **Z1** of the kneading section **3** on the inner peripheral surface **20** side and the start point **Z3** of the kneading section **3** on the rotor **1** side, and a second weir **32,** which is a wall (cliff face) indicated by a line that connects together the end point **Z2** of the kneading section **3** on the inner peripheral surface **20** side and the end point **Z4** of the kneading section **3** on the rotor **1** side.

The kneading section **3** extends from the first weir **31** to the second weir **32** in the rotation direction **R** of the rotor **1.** On the other hand, the non-kneading section **4** extends from the second weir **32** to the first weir **31** in the rotation direction **R** of the rotor **1.**

The inner peripheral surface **20** of the casing **2** of FIG. **4** has a first surface **21** and a second surface **22.**

The first surface **21** is defined as a surface extending from the first weir **31** to the second weir **32** in the clockwise direction, and the second surface **22** is defined as a surface extending from the second weir **32** to the first weir **31** in the clockwise direction.

The first and second weirs **31, 32** are arranged at the boundaries between the first surface **21** and the second surface **22,** extend in the radial direction D of the rotor **1,** and are each formed in a stepped shape. In other words, the first and second weirs **31, 32** connect together the first surface **21** and the second surface **22,** and are formed by cliff faces that extend in the radial direction **D** of the rotor **1** and in the direction of the rotor axis **1S** (FIG. **1****).**

Note that the first and second weirs **31, 32** may not be a stepped shape integral with the casing **2,** but may be formed by pieces and bolts (valves) separate from the casing **2** (see the assembly **36** of the first patent document, and the restrictor bar **62,** the spaced screws **64** of the second patent document).

In FIG. **4****,** the crescent-shaped gap (the kneading section **3)** narrows from the top portion **23** toward a side portion **25** upstream of the lowest portion **11.** The crescent-shaped gap (the kneading section **3)** further narrows from the side portion **25** toward the lowest portion **11.**

Next, the position of each portion will be described in detail by comparing it to the dial of a clock that displays the hours from 1 o'clock to 12 o'clock.

In FIG. **4****,** the input port **P1** of the top portion **23** is provided between 11 o'clock (the position **X11**) and 1 o'clock (the position **X1).**

In the present specification, "top portion" refers to an area between 10 o'clock (the position **X10**) and 2 o'clock (the position **X2**), and preferably refers to an area between 11 o'clock (the position **X11**) and 1 o'clock (the position **X1**)**.** The center of the feeding of the resin material **Bs** (the axis of the screw feeder **302**) is arranged at the top portion **23.**

On the other hand, the discharge port **P2** at the lower portion **24** is open to the gap (the kneading section **3**) between a position that is before 9 o'clock (the position **X9**) in the clockwise direction and 7 o'clock (the position **X7**).

In these cases, the first weir **31** may be located between 12 o'clock (the position **X0**) and 11 o'clock (the position **X11**) in the clockwise direction (the rotation direction **R**), and the second weir **32** may be located at a position that is before 9 o'clock (the position **X9**) in the clockwise direction (the rotation direction **R**) and up to 8 o'clock (the position **X8**) or 7 o'clock (the position **X7**)**.**

The size of the gap (the kneading section **3**) of FIG. **4** gradually narrows from 1 o'clock (the position **X1**) toward 3 o'clock (the position **X3**), and further gradually narrows from 3 o'clock (the position **X3**) toward 6 o'clock (the position **X6**)**.**

In the present embodiment, the discharge port **P2** extends in the orthogonally downward direction from the opening of the gap (the kneading section **3**), but it may extend diagonally downward.

The molten resin **B** discharged from the discharge port **P2** shown in FIG. **2** passes through the manifold **500** and the die **502** by the rotary drive of the gear pump **400,** thus turning into a large number of thin continuous strips (FIG. **1**)**.**

As shown in FIG. **3(a)****,** the molten resin **B** hanging down from the die **502** is cooled at the outer peripheral surface of the first and second cooling rolls **T1, T2** and is conveyed along the outer peripheral surface.

The present rotary extruder **200** of FIG. **4** has the function of heating and controlling the temperature of the molten resin **B.**

As shown in FIG. **4****,** a large number of rod-shaped heaters **50** are arranged in the casing **2** around the rotor **1.** A rod-shaped temperature sensor (not shown) is arranged in the casing **2,** together with the heaters **50,** to control heating by the heaters **50.** Note that an appropriate control may be performed based on the detected temperature of the temperature sensor.

The refrigerant flow paths **5S** arranged in the vicinity of the heaters **50** are for a cooling operation performed when the heaters **50** are heated at or above a predetermined temperature.

The joint **14** of FIG. **1****,** etc., are provided with the fins **16** for heat dissipation, and the refrigerant air from an air passage **52** provided in the casing **2** cools the fins **16** to prevent heat from being transferred to the motor **15** through the joint **14.**

The manifold **500** of FIG. **2** may be provided with a square plate-shaped temperature controller **501** that makes uniform the temperature of the entire manifold **500.**

While a case where the molten resin **B** is elastic strands **F1** has been described above with reference to FIG. **3(a)****,** the molten resin **B** may be a hot melt adhesive, for example, instead of elastic strands **F1** in the present invention.

For example, as shown in FIG. **3(b)****,** the molten resin **B** can also be employed when bonding together a pair of webs **W1, W2** that have no elastic strands **F.** The pair of webs **W1, W2** are laminated on each other while being sandwiched between a pair of nip rollers **600, 600.** The laminated pair of webs is used in diapers and masks, for example.

As shown in FIG. **3(c)****,** the molten resin **B** may be applied to one web **W1** as an adhesive to sandwich and bond elastic strands **F2** between the pair of webs **W1, W2,** for example.

The pair of webs **W1, W2** and the elastic strands **F** are sandwiched between the pair of nip rollers **600, 600** to produce a stretch sheet **S** (stretch laminate). The stretch sheet **S** is used as a stretch sheet for the girth portion of the wearable article, for example.

The positions of the input port **P1** and discharge port **P2** of FIG. **4** can be set as desired. For example, the discharge port **P2** may be located at 6 o'clock (the position **X6**), which is the lowest portion of the rotor **1,** or it may be located between 4 o'clock (the position **X4**) and 8 o'clock (the position **X8**), which is below 3 o'clock (the position **X3**) and 9 o'clock (the position **X9**).

The specific embodiment described above primarily includes an invention having the following elements.

The rotary extruder **200** includes: a rotor **1** having a cylindrical surface **10** centered on a rotor axis **1S** extending in a horizontal direction; and a casing **2** having an inner peripheral surface **20** that defines a cylindrical hole **2B** extending in the horizontal direction, wherein: the casing **2** defines an input port **P1** into which a resin material **Bs** including a thermoplastic resin is fed, and a discharge port **P2** from which a molten resin **B,** obtained by kneading and plasticizing the resin material **Bs,** is discharged; the cylindrical surface **10** of the rotor **1** and the inner peripheral surface **20** of the casing **2** are arranged eccentric with each other, thereby forming a kneading section **3,** which is a gap whose cross section is crescent-shaped, extending in a rotation direction **R** of the rotor **1** from the input port **P1** to the discharge port **P2** between the inner peripheral surface **20** of the casing **2** and the cylindrical surface **10** of the rotor **1**; and the input port **P1** is arranged at a top portion **23** of the casing **2** and the discharge port **P2** is arranged at a lower portion **24** on an opposite side from the top portion **23** of the casing **2.**

With the configuration described above, the resin material **Bs,** which is input into the casing **2** through the input port **P1,** is pushed into a crescent-shaped gap (the kneading section **3**), is plasticized as it moves downstream in the rotation direction **R** of the rotor **1,** and is discharged continuously from the discharge port **P2.** Now, since the discharge port **P2** is not arranged at a side portion of the rotor **1** but is arranged at the lower portion **24** on the opposite side from the top portion **23,** there is unlikely slippage between the rotor **1** and the molten resin even if the viscosity of the molten resin **B** is low. Therefore, the molten resin **B** can be discharged stably from the discharge port **P2** at the lower portion **24** irrespective of the viscosity of the plasticized thermoplastic resin.

In a preferred embodiment, the kneading section **3** extends halfway around the rotor **1** from the input port **P1** to a lowest portion **11** of the rotor **1,** and further extends from the lowest portion **11** of the rotor **1** to the discharge port **P2,** which is above the lowest portion **11** and below a position that is orthogonally sideward of the rotor **1.**

In this case, the discharge port **P2** is arranged at a position farther away from the input port **P1** than the lowest portion **11,** thus allowing more time to plasticize the thermoplastic resin in the kneading section **3.**

In another preferred embodiment, a non-kneading section **4** is formed between the casing **2** and the rotor **1,** extending from a position that is downstream of the discharge port **P2** in the rotation direction **R** of the rotor **1** to a position that is upstream of the input port **P1** in the rotation direction **R,** wherein the rotor **1** closely opposes the inner peripheral surface **20** of the casing **2.**

In this case, in the non-kneading section **4,** the cylindrical surface **10** of the rotor **1** closely opposes the inner peripheral surface **20** of the casing **2,** and it is difficult for the molten resin to enter the non-kneading section **4.** Therefore, the rotary extruder is unlikely to malfunction due to, for example, carbonization of the resin that has entered the non-kneading section **4.**

In another preferred embodiment, in the non-kneading section **4,** the cylindrical surface **10** of the rotor **1** closely opposes the inner peripheral surface **20** of the casing **2;** and in the kneading section **3,** the inner peripheral surface **20** of the casing **2** distantly opposes the cylindrical surface **10** of the rotor **1.**

In this case, while the resin material **Bs** flows downstream while being plasticized in the kneading section **3,** the molten resin **B** is unlikely to enter the non-kneading section **4.**

In another preferred embodiment, the casing **2** is provided with a first weir **31** and a second weir **32,** which are boundaries between the kneading section **3** and the non-kneading section **4;** the kneading section **3** extends from the first weir **31** in the rotation direction **R** of the rotor **1** to the second weir **32;** and the non-kneading section **4** extends from the second weir **32** in the rotation direction **R** of the rotor **1** to the first weir **31.**

Since the kneading section **3** and the non-kneading section **4** are partitioned from each other by the first and second weirs **31, 32** as described above, the resin material **Bs** can be plasticized in the kneading section **3** while it is possible to prevent the molten resin **B** from entering the non-kneading section **4.**

In another preferred embodiment, the inner peripheral surface **20** of the casing **2** has a first surface **21** and a second surface **22** that are continuous with each other in a circumferential direction; the first surface **21** defines the kneading section **3** and the second surface **22** defines the non-kneading section **4;** and a radius of curvature of the first surface **21** is larger than a radius of curvature of the rotor **1,** and a radius of curvature of the second surface **22** is smaller than the radius of curvature of the first surface **21.**

That is, the inner peripheral surface **20** has the first surface **21** that is spaced apart from the cylindrical surface **10** of the rotor **1** in the kneading section **3** and has a radius of curvature larger than that of the rotor **1,** and the second surface **22** that is spaced apart from the cylindrical surface **10** of the rotor **1** in the non-kneading section **4** and has a radius of curvature smaller than that of the first surface **21.** The distance between the cylindrical surface **10** and the first surface **21** is larger than the distance between the cylindrical surface **10** and the second surface **22.**

In this case, it is easy to form a gap (the kneading section **3**) between the cylindrical surface **10** of the rotor **1** and the first surface **21,** while it is easy to form the non-kneading section **4** into which the molten resin **B** cannot easily enter.

In another preferred embodiment, the first weir **31** and the second weir **32** are arranged at boundaries between the first surface **21** and the second surface **22,** extend in a radial direction **D** of the rotor **1,** and are each formed in a stepped shape.

In this case, as compared with a case where weirs are formed as movable valves, weirs have higher functionality, and there is unlikely to be a problem such as the molten resin **B** slipping into between the rotor **1** and the casing **2** to be carbonized.

In another preferred embodiment, the crescent-shaped gap (the kneading section **3**) narrows from the top portion **23** toward a side portion **25** upstream of the lowest portion **11.** More preferably, the crescent-shaped gap (the kneading section **3**) further narrows from the side portion **25** toward the lowest portion **11.**

In such cases, the resin material **Bs** is more likely to be kneaded as it moves downstream.

Any feature illustrated and/or depicted in conjunction with one embodiment or preferred embodiments may be used in the same or similar form in one or more of the other embodiments, and/or may be used in combination with, or in place of, any feature of the other embodiments.

While preferred embodiments have been described above with reference to the drawings, obvious variations and modifications will readily occur to those skilled in the art upon reading the present specification.

For example, there may be one screw feeder.

The casing may be in a cylindrical shape instead of a prism shape.

Thus, such variations and modifications shall fall within the scope of the present invention as defined by the appended claims.

### INDUSTRIAL APPLICABILITY

The present invention is applicable to the manufacture of a molten resin obtained by kneading and plasticizing a resin material including a thermoplastic resin.

### REFERENCE SIGNS LIST

1: Rotor, IS: Rotor axis, 10: Cylindrical surface, 11: Lowest portion, 12, 13: Rotary shaft
14: Joint, 15: Motor, 16: Fin
2: Casing, 2B: Bore (hole), 20: Inner peripheral surface, 21: First surface, 22: Second surface
23: Top portion, 24: Lower portion, 25: Side portion, 26: End plate
3: Kneading section (gap), 31: First weir, 32: Second weir
4: Non-kneading section, 5S: Refrigerant flow path
B: Molten resin, Bs: Resin material including thermoplastic resin
D: Radial direction, F1, F2: Elastic strands, S: Stretch sheet, T1, T2: Cooling roll
W1, W2: Pair of webs
P1: Input port, P2: Discharge port, R: Rotation direction
100: Molten resin maker, 200: Rotary extruder
300: Material feeder, 301: Hopper, 302: Screw feeder
400: Gear pump, 500: Manifold, 501: Temperature controller, 502: Die
600: Nip roller
Z1: Start point of kneading section on inner peripheral surface side, Z2: End point of kneading section on inner peripheral surface side
Z3: Start point of kneading section on rotor side, Z4: End point of kneading section on rotor side

## Claims

1. A rotary extruder comprising:
a rotor **1** having a cylindrical surface **10** centered on a rotor axis **1S** extending in a horizontal direction; and
a casing **2** having an inner peripheral surface **20** that defines a cylindrical hole **2B** extending in the horizontal direction, wherein:
the casing **2** defines an input port **P1** into which a resin material **Bs** including a thermoplastic resin is fed, and a discharge port **P2** from which a molten resin **B,** obtained by kneading and plasticizing the resin material **Bs,** is discharged;
the cylindrical surface **10** of the rotor **1** and the inner peripheral surface **20** of the casing **2** are arranged eccentric with each other, thereby forming a kneading section **3,** which is a gap whose cross section is crescent-shaped, extending in a rotation direction **R** of the rotor **1** from the input port **P1** to the discharge port **P2** between the inner peripheral surface **20** of the casing **2** and the cylindrical surface **10** of the rotor **1**; and
the input port **P1** is arranged at a top portion **23** of the casing **2** and the discharge port **P2** is arranged at a lower portion **24** on an opposite side from the top portion **23** of the casing **2.**

2. The rotary extruder according to claim 1, wherein the kneading section **3** extends halfway around the rotor **1** from the input port **P1** to a lowest portion **11** of the rotor **1,** and further extends from the lowest portion **11** of the rotor **1** to the discharge port **P2,** which is above the lowest portion **11** and below a position that is orthogonally sideward of the rotor **1.**

3. The rotary extruder according to claim 2, wherein a non-kneading section **4** is formed between the casing **2** and the rotor **1,** the non-kneading section **4** extending from a position that is downstream of the discharge port **P2** in the rotation direction **R** of the rotor **1** to a position that is upstream of the input port **P1** in the rotation direction **R,** wherein the rotor **1** closely opposes the inner peripheral surface **20** of the casing **2.**

4. The rotary extruder according to claim 3, wherein:
in the non-kneading section **4,** the cylindrical surface **10** of the rotor **1** closely opposes the inner peripheral surface **20** of the casing **2;** and
in the kneading section **3,** the inner peripheral surface **20** of the casing **2** distantly opposes the cylindrical surface **10** of the rotor **1.**

5. The rotary extruder according to claim 4, wherein:
the casing **2** is provided with a first weir **31** and a second weir **32,** which are boundaries between the kneading section **3** and the non-kneading section **4**;
the kneading section **3** extends from the first weir **31** in the rotation direction **R** of the rotor **1** to the second weir **32;** and
the non-kneading section **4** extends from the second weir **32** in the rotation direction **R** of the rotor **1** to the first weir **31.**

6. The rotary extruder according to claim 5, wherein:
the inner peripheral surface **20** of the casing **2** has a first surface **21** and a second surface **22** that are continuous with each other in a circumferential direction;
the first surface **21** defines the kneading section **3** and the second surface **22** defines the non-kneading section **4**; and
a radius of curvature of the first surface **21** is larger than a radius of curvature of the rotor **1,** and a radius of curvature of the second surface **22** is smaller than the radius of curvature of the first surface **21.**

7. The rotary extruder according to claim 6, wherein the first weir **31** and the second weir **32** are arranged at boundaries between the first surface **21** and the second surface **22,** extend in a radial direction **D** of the rotor **1,** and are each formed in a stepped shape.

8. The rotary extruder according to claim 2, wherein the crescent-shaped gap narrows from the top portion **23** toward a side portion **25** upstream of the lowest portion **11.**

9. The rotary extruder according to claim 8, wherein the crescent-shaped gap further narrows from the side portion **25** toward the lowest portion **11.**
